# EUROPÄISCHE PATENTSCHRIFT

(11) **EP 1 866 535 B1**
(45) Veröffentlichungstag und Bekanntmachung des Hinweises auf die Patenterteilung: **01.10.2008**
(21) Anmeldenummer: 06707326.2
(22) Anmeldetag: 28.02.2006
(51) Int. Cl.: F02D 13/02, F02D 35/00, F02D 41/34, F02D 41/40, F02D 23/00, F02M 25/07

(54) **VERFAHREN ZUM BETRIEB EINER BRENNKRAFTMASCHINE UND BRENNKRAFTMASCHINE HIERZU**
METHOD FOR OPERATING AN INTERNAL COMBUSTION ENGINE AND INTERNAL COMBUSTION ENGINE
PROCEDE POUR FAIRE FONCTIONNER UN MOTEUR A COMBUSTION INTERNE ET MOTEUR A COMBUSTION INTERNE CORRESPONDANT

(30) Priorität: 17.03.2005 DE 102005012306
(43) Veröffentlichungstag der Anmeldung: 19.12.2007
(73) Patentinhaber: Daimler AG, 70327 Stuttgart (DE)
(72) Erfinder: SCHMID, Wolfram, 72622 Nürtingen (DE); SUMSER, Siegfried, 70327 Stuttgart (DE)
(86) Internationale Anmeldenummer: PCT/EP2006/001820
(87) Internationale Veröffentlichungsnummer: WO 2006/097190

(56) Entgegenhaltungen:
- FR-A- 2 840 015
- US-A- 5 558 051
- US-A1- 2004 139 949
- US-B1- 6 530 361

## Beschreibung

Die Erfindung bezieht sich auf ein Verfahren zum Betrieb einer Brennkraftmaschine nach dem Oberbegriff des Anspruches 1 und auf eine Brennkraftmaschine nach dem Oberbegriff des Anspruches 12.

In der Druckschrift US 6 688 280 B2 wird ein Verfahren zur Reduzierung von Stickoxiden beschrieben, die im befeuerten Betrieb einer Brennkraftmaschine entstehen. Hierbei wird die Öffnungshubbewegung des Einlassventils am Zylinder hinausgezögert, sodass während des Kompressionshubs das Einlassventil noch in Öffnungsposition steht und ein Teil der bereits in den Brennraum eingeleiteten Verbrennungsluft wieder über das geöffnete Einlassventil in den vorgelagerten Luftsammler zurückströmen kann. Hierdurch werden sowohl der Brennrauminnendruck als auch die Brennraumtemperatur abgesenkt, was sich günstig auf die Entstehung von Stickoxiden auswirkt.

Die Stickoxidemissionen können auch mithilfe einer Abgasrückführung reduziert werden. Bei einem derartigen Verfahren, das beispielsweise in der DE 197 34 494 C1 beschrieben wird, wird im Teillastbetrieb der Brennkraftmaschine ein Teil des Abgasmassenstromes aus dem Abgasstrang über eine Rückführleitung in den Ansaugtrakt geleitet, wo sich das Abgas mit der herangeführten Verbrennungsluft vermischt. Bei derartigen Abgasrückführungen besteht aber das Problem, dass mit zunehmender Rückführrate auch die Gefahr der Verschmutzung bzw, der Verkokung insbesondere eines Abgas-Wärmetauschers, welcher sich in der Rückführleitung befindet, anwächst, wodurch der Wärmehaushalt der Brennkraftmaschine negativ verstimmt wird und die Leistungsfähigkeit des Motors sowie das Abgasverhalten negativ beeinflusst werden. Alternativ, wie in der US 6,530,361 beschrieben wird, können die Abgase intern rezirkuliert werden.

Von diesem Stand der Technik ausgehend liegt der Erfindung das Problem zugrunde, mit einfach durchzuführenden Maßnahmen und ohne Beeinträchtigung der Lebensdauer der Brennkraftmaschine bzw. von Aggregaten der Brennkraftmaschine die Abgasemissionen zu senken.

Dieses Problem wird erfindungsgemäß bei einem Verfahren mit den Merkmalen des Anspruches 1 und bei einer Brennkraftmaschine mit den Merkmalen des Anspruches 12 gelöst. Die Unteransprüche geben zweckmäßige Weiterbildungen an.

Die Einlassventile der Brennkraftmaschine sind variabel ausgebildet, sodass die Hubkurve der Einlassventile den aktuellen Randbedingungen entsprechend variiert werden kann. Erfindungsgemäß ist nun vorgesehen, dass im Teillastbetrieb der Brennkraftmaschine der Schließzeitpunkt der Einlassventile sowie der Einspritzzeitpunkt, zu dem Kraftstoff in die Brennräume eingespritzt wird, als Funktion der Zylinderinnentemperatur variabel eingestellt werden. Auf diese Weise wird eine temperaturgeregelte Verbrennung erreicht, bei der die Zylinderinnentemperatur die Regelgröße darstellt. Dadurch ist sichergestellt, dass im Teillastbetrieb im Brennraum die optimale Temperatur herrscht, wodurch insbesondere die NOₓ-Emissionen reduziert werden. Im Falle eines Dieselmotors können die für eine Selbstzündung erforderliche Innenraumtemperatur und der erforderliche Innendruck mit hoher Präzision eingestellt werden.

Bei einem verzögerten Schließvorgang des Einlassventiles über den unteren Totpunkt hinaus steht der Brennrauminhalt noch in der Kompressionsphase mit dem Ansaugtrakt in Strömungsverbindung, wodurch eine Druckreduzierung und damit einhergehend auch eine Temperaturreduzierung erreicht wird. Der Brennrauminhalt wird teilweise über das geöffnete Einlassventil wieder in den Ansaugtrakt zurückgefördert.

Auch bei einem vorzeitigen Schließen des Einlassventils - Schließzeitpunkt bereits vor dem Erreichen des unteren Totpunktes - stellt sich ein geringerer Innendruck und eine geringere Innenraumtemperatur ein, da die Brennräume nur zu einem geringeren Grad befüllt werden.

In beiden Fällen, also sowohl bei einem Schließen des Einlassventils vor dem unteren Totpunkt als auch beim Schließen nach dem unteren Totpunkt, steht eine wirksame Einstellmöglichkeit zur Regulierung der Zylinderinnentemperatur zur Verfügung. Die Verschiebung des Schließzeitpunktes des Einlassventils wird insbesondere in einem mittleren Teillastbereich der Brennkraftmaschine durchgeführt, in welchem noch keine maximale Brennraumbefüllung erforderlich ist. Aufgrund des geringfügig reduzierten Luftanteils kann ein leicht angefettetes Kraftstoff-Luft-Gemisch eingestellt werden, welches die NOₓ-Reduzierung weiter begünstigt.

Ein weiterer Vorteil des erfindungsgemäßen Verfahrens liegt in der vergleichsweise homogenen Verteilung des Kraftstoff-Luft-Gemisches im Brennraum während des Teillastbetriebes, da durch die Verschiebung des Schließzeitpunktes des Einlassventils zusätzliche Strömungsturbulenzen im Brennraum entstehen, die für eine bessere Durchmischung im Brennraum sorgen. Im Fall des verzögerten Schließens über den unteren Totpunkt hinaus steht außerdem mehr Zeit für die Durchmischung zur Verfügung.

Der Winkelbereich, innerhalb dessen der Schließzeitpunkt der Einlassventile variiert werden kann, liegt zweckmäßig etwa zwischen 60° vor dem unteren Totpunkt und 120° nach dem unteren Totpunkt. Dies ergibt einen Gesamt-Winkelbereich von etwa 180° gegenüber konventionellen, festliegenden Schließkurven, innerhalb dessen die Schließkurve zur Erzielung eines homogenen Gemisches und zur NOₓ-Reduzierung variiert werden kann.

Zur Unterstützung der Homogenisierung kann es zweckmäßig sein, den Kraftstoff zur gleichmäßigen Verteilung im Brennraum über eine Mehrzahl von Düsenöffnungen pro Zylinder im Brennraum zu verteilen.

In bevorzugter Weiterbildung sind jedem Zylinder mindestens zwei Einlassventile vorgesehen, wobei im Teillastbetrieb sowohl eine synchrone als auch eine asynchrone Betätigung der beiden Einlassventile mit verschobenem Schließzeitpunkt in Betracht kommt. Beispielsweise können die Einlassventile an jedem Zylinder über den unteren Totpunkt hinausgehend offen gehalten werden, jedoch unterschiedliche Schließzeitpunkte aufweisen.

Ein weiterer erfindungsgemäßer Aspekt liegt in der Realisierung einer so genannten inneren Abgasrückführung, bei der Abgas aus dem Abgasstrang direkt über die Zylinder wieder in den Ansaugtrakt zurückgeführt wird. Erreicht wird dies beispielsweise durch ein gleichzeitiges Offenhalten der Auslassventile und der Einlassventile an den Zylindern während einer Überschneidungsphase.

Bei der erfindungsgemäßen Brennkraftmaschine werden die Einlassventile im Teillastbetrieb von Stellsignalen einer Regel- und Steuereinheit variabel eingestellt, wobei die Schließzeitpunkte der Einlassventile sowie der Kraftstoff-Einspritzzeitpunkt als Funktion der Zylinderinnentemperatur bestimmt werden. Im Volllastbetrieb und zweckmäßigerweise auch im niedrigen Teillastbetrieb wird dagegen bevorzugt auf eine fest vorgegebene Schließkurve des Einlassventils umgeschalten, gemäß der das Einlassventil im unteren Totpunkt geschlossen wird. Gegebenenfalls kommt aber auch im Volllastbetrieb und im niedrigen Teillastbetrieb eine variable Einstellung der Einlassventil-Hubkurve in Betracht.

Diese Brennkraftmaschine kann mit diversen zusätzlichen Aggregaten ausgestattet werden, beispielsweise mit einem Abgasturbolader, gegebenenfalls auch mit zwei in Reihe geschalteten Abgasturboladern, von denen eine Abgasturbine oder auch beide Abgasturbinen mit einer variablen Turbinengeometrie zur veränderlichen Einstellung des wirksamen Turbineneintrittsquerschnittes ausgestattet sein können. Möglich ist auch ein Bypass um eine bzw. um beide Turbinen und/oder um einen oder um beide Verdichter der Lader. Es stehen hierdurch zusätzliche Einstellmöglichkeiten zur Beeinflussung des Abgasgegendruckes und des Ladedruckes zur Verfügung.

Des Weiteren kann eine Abgasrückführungseinrichtung vorgesehen sein, welche eine Rückführleitung zwischen dem Abgasstrang und dem Ansaugtrakt umfasst. Zur Regulierung des rückführenden Abgasmassenstromes ist in der Rückführleitung ein einstellbares Sperrventil angeordnet, außerdem kann zur Abgaskühlung ein Kühler vorgesehen sein. Diese so genannte äußere Abgasrückführung, die mithilfe einer zusätzlichen Rückführleitung realisiert wird, kann mit der vorbeschriebenen inneren Abgasrückführung kombiniert werden, wobei gemäß einer zweckmäßigen Ausführung zunächst die innere Abgasrückführung aktiviert wird und die äußere Abgasrückführung erst in dem Moment zugeschaltet wird, wenn der rückzuführende Abgasmassenstrom nicht mehr allein über die innere Abgasrückführung zu bewältigen ist.

Des Weiteren kann eine gemeinsame Abgassammelschiene für sämtliche Zylinder angeordnet werden, in die das Abgas aller Zylinder eingeleitet wird. Diese Abgassammelschiene kann separat gekühlt werden, außerdem ist eine Einspeisung von Zusatzluft mithilfe eines Kompressors möglich, wodurch der Abgasgegendruck erhöht wird. Der erhöhte Druck in der Abgassammelschiene kann wiederum für Abgasrückführung in einem breiten Betriebsbereich ausgenutzt werden. Es kommt auch eine Steigerung der Motorbremsleistung als Folge des gesteigerten Abgasgegendrucks in Betracht.

Eine weitere Möglichkeit, den Druck in der Abgassammelschiene zu erhöhen, besteht in einer Zylinder-Teilabschaltung und der Nutzung der nicht befeuerten Zylinder als Kompressoren, die die zugeführte Verbrennungsluft komprimieren und in die Abgassammelschiene entlassen. Durch eine geeignete Steuerung der Einlass- und Auslassventile der nicht befeuerten Zylinder kommt auch eine Ladedruckaufladung im Ansaugtrakt in Betracht, indem die in den nicht befeuerten Zylindern komprimierte Verbrennungsluft in den Ansaugtrakt entlassen und den befeuerten Zylindern zugeführt wird.

Weitere Vorteile und zweckmäßige Ausführungen sind den weiteren Ansprüchen, der Figurenbeschreibung und den Zeichnungen zu entnehmen. Es zeigen:
- Fig. 1: eine schematische Darstellung einer Brennkraftmaschine mit zweistufiger Aufladung und einer Abgasrückführungseinrichtung,
- Fig. 2: ein Schaubild mit dem Verlauf der Öffnungskurven von Auslassventil und Einlassventil am Zylinder in Abhängigkeit vom Kurbelwinkel,
- Fig. 3: eine schematische Darstellung einer Brennkraftmaschine in einer weiteren Ausführung, in der die Zylinder der Brennkraftmaschine mit einer gemeinsamen Abgassammelschiene verbunden sind.

In den Figuren sind gleiche Bauteile mit gleichen Bezugszeichen versehen.

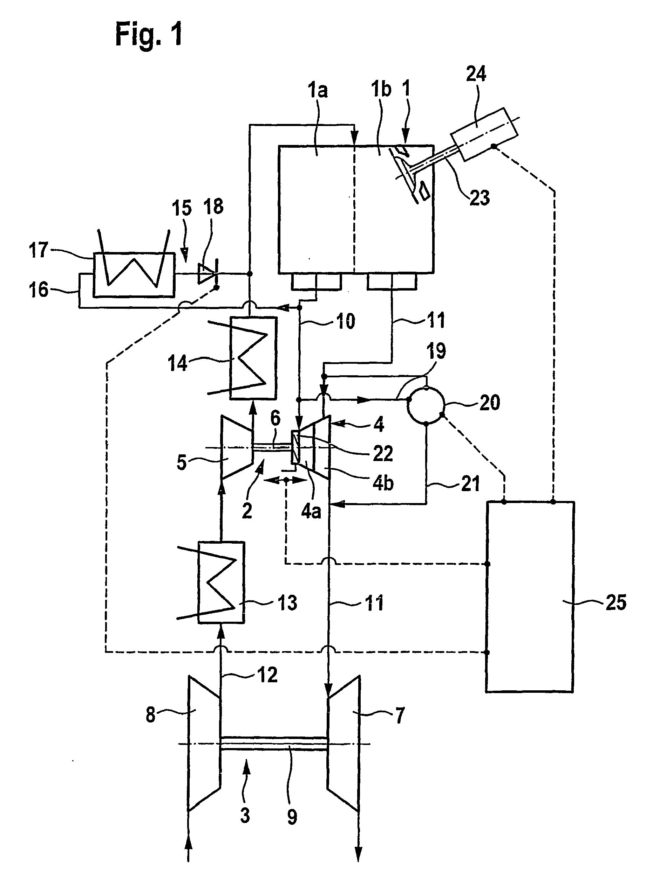

Die in Fig. 1 dargestellte Brennkraftmaschine 1 - ein Ottomotor oder ein Dieselmotor - ist mit zwei in Reihe geschalteten Abgasturboladern 2 und 3 ausgestattet, von denen der motornah angeordnete Abgasturbolader 2 die Funktion eines Hochdruckladers und der motorferne Abgasturbolader 3 die Funktion eines Niederdruckladers übernimmt, was dadurch realisiert wird, dass der Hochdrucklader kleiner dimensioniert ist als der Niederdrucklader und daher ein geringeres Massenträgheitsmoment besitzt.

Der motornahe Abgasturbolader 2 umfasst eine Abgasturbine 4 im Abgasstrang der Brennkraftmaschine, deren Turbinenrad über eine Welle 6 mit dem Verdichterrad im Verdichter 5 im Ansaugtrakt 12 verbunden ist. Die Abgasturbine 4 ist zweiflutig aufgebaut und umfasst zwei Abgasfluten 4a und 4b, die unterschiedlich groß ausgebildet sind. Die beiden Abgasfluten 4a und 4b sind über jeweils einen Abgasleitungsabschnitt 10 und 11 mit jeweils einer Zylinderbank 1a bzw. 1b der Brennkraftmaschine 1 verbunden. Nur das Abgas der betreffenden Zylinderbank 1a bzw. 1b wird über den zugeordneten Abgasleitungsabschnitt 10 bzw. 11 in die jeweilige Abgasflut 4a bzw. 4b geleitet.

Darüber hinaus ist die Abgasturbine 4 mit einer variablen Turbinengeometrie 22 ausgestattet, über die der wirksame Turbineneintrittsquerschnitt zwischen einer minimalen Stauposition und einer maximalen Öffnungsposition zu verstellen ist. Die variable Turbinengeometrie 22 ist beispielsweise als axial verschiebbares Leitgitter oder als axial feststehendes Leitgitter mit verstellbaren Leitschaufeln ausgeführt.

Von der Abgasleitung 11 zweigt ein die Abgasturbine 4 überbrückender Bypass ab. Dieser Bypass umfasst eine Überbrückungsleitung 21, die stromauf der Abgasturbine von der Abgasleitung 11 abzweigt und stromab der Abgasturbine wieder in die Abgasleitung 11 einmündet. In der Überbrückungsleitung 21 befindet sich ein einstellbares Sperrventil 20. Darüber hinaus ist ein von der ersten Abgasleitung 10, welche der kleineren Abgasflut 4a zugeordnet ist, abzweigender Leitungsabschnitt 19 vorgesehen, welcher in die Überbrückungsleitung 21 einmündet. Durch das Sperrventil 20 in der Überbrückungsleitung 21 kann sowohl der Durchfluss durch die Überbrückungsleitung 21 als auch der Durchfluss durch den Leitungsabschnitt 19 reguliert werden. Auf diese Weise ist es möglich, in einer Sperrposition die Überbrückungsleitung 21 vollständig zu schließen, sodass auch der Leitungsabschnitt 19 abgeriegelt ist und das Abgas weder aus der Abgasleitung 10 noch aus der Abgasleitung 11 durch den Bypass geführt wird. In einer ersten Öffnungsposition ist der Leitungsabschnitt 19 geschlossen und die Überbrückungsleitung 21 geöffnet, sodass nur das Abgas aus dem Leitungsabschnitt 11 für die größere Abgasflut 4b über den Bypass geleitet wird, nicht jedoch das Abgas aus dem Leitungsabschnitt 10 für die kleinere Abgasflut 4a. In einer zweiten Öffnungsposition sind die Verhältnisse umgekehrt, sodass nur das Abgas aus dem Leitungsabschnitt 10, nicht jedoch das Abgas aus dem Leitungsabschnitt 11 über den Bypass geleitet wird. In einer dritten Öffnungsposition wird zwischen den Leitungsabschnitten 10 und 11 umgeblasen, jedoch kein Abgas über die Überbrückungsleitung zur Umgehung der Abgasturbine geführt. Schließlich ist es auch möglich, das Abgas aus beiden Leitungsabschnitten 10 und 11 über den Bypass abzuleiten.

Der motorferne Abgasturbolader 3 umfasst eine Abgasturbine 7 im Abgasstrang, deren Turbinenrad über eine Welle 9 mit dem Verdichterrad im Verdichter 8 verbunden ist, wobei der Verdichter 8 im Ansaugtrakt 12 der Brennkraftmaschine angeordnet ist. Im Betrieb der Brennkraftmaschine saugt der Verdichter 8 Verbrennungsluft an und erhöht diese auf einen erhöhten Druck, unter dem die Verbrennungsluft zunächst in einem ersten Ladeluftkühler 13 gekühlt wird. Im weiteren Verlauf wird die vorverdichtete Verbrennungsluft dem nachgeschalteten Verdichter 5 des motornahen Abgasturboladers zugeführt. Stromab des Verdichters 5 wird die komprimierte Verbrennungsluft in einem zweiten Ladeluftkühler 14 gekühlt und anschließend unter Ladedruck den Zylindern der Brennkraftmaschine zugeführt.

Auf der Abgasseite wird das in der Brennkraftmaschine in den Zylinderbänken 1a und 1b erzeugte Abgas über die Abgasleitungen 10 und 11 den Abgasfluten 4a bzw. 4b der Abgasturbine 4 zugeführt, wodurch das Turbinenrad angetrieben wird. Nach der Entspannung in der Abgasturbine 4 werden die Abgase in dem Abgasleitungsabschnitt 11 gesammelt und dem Verdichter 7 des motorfernen Turboladers 3 zugeführt, indem die restliche nutzbare Energie des Abgases zum Antrieb des Turbinenrades genutzt wird.

Des Weiteren ist eine Abgasrückführungseinrichtung 15 vorgesehen, die eine Abgasrückführleitung 16 umfasst, die von der Abgasleitung 10 stromauf der Abgasturbine 4 abzweigt und stromab des zweiten Ladeluftkühlers 14 in den Ansaugtrakt 12 einmündet. In der Abgasrückführleitung 16 ist ein Abgaskühler 17 sowie ein einstellbares Sperrventil 18 angeordnet.

Zumindest die Zylinder der zweiten Zylinderbank 1b der Brennkraftmaschine 1 sind mit variabel zu verstellenden Gaswechselventilen 23 ausgerüstet, die über Aktuatoren 24 zwischen Schließposition und Öffnungsposition zu verstellen sind. Bei diesen verstellbaren Gaswechselventilen 23 handelt es sich insbesondere um die Einlassventile an den Zylindern der zweiten Zylinderbank 1b, gegebenenfalls können aber auch die Auslassventile als variabel verstellbare Ventile ausgeführt sein. Schließlich ist es auch möglich, die Gaswechselventile der ersten Zylinderbank 1a variabel verstellbar auszubilden.

Sämtliche verstellbaren Baueinheiten der Brennkraftmaschine werden von einer Regel- und Steuereinheit 25 kontrolliert. In der Regel- und Steuereinheit 25 werden in Abhängigkeit von Zustands- und Betriebsgrößen der Brennkraftmaschine und der Aggregate Stellsignale erzeugt, über die insbesondere das Sperrventil 18 in der Abgasrückführleitung 16, die variable Turbinengeometrie 22 in der motornahen Abgasturbine 4 und der Aktuator 24 für das Gaswechselventil 23 und das Sperrventil 20 in der Überbrückungsleitung 21 beaufschlagt werden.

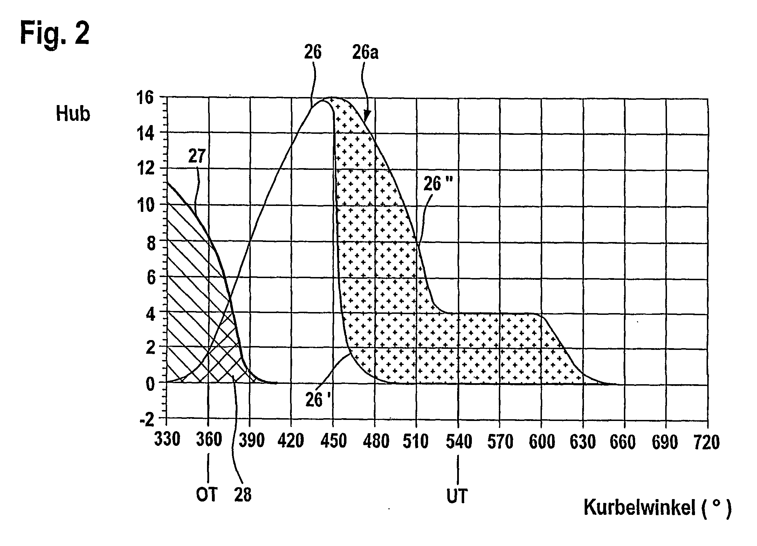

In dem Schaubild nach Fig. 2 sind die Öffnungskurven für das Einlassventil und das Auslassventil an einem Zylinder der Brennkraftmaschine dargestellt. Gezeigt ist der Hub jedes Einlass- bzw. Auslassventils als Funktion des Kurbelwinkels in Grad. Dargestellt ist ein Ausschnitt innerhalb eines Arbeitszyklus der Brennkraftmaschine im Bereich zwischen 330° und 720° Kurbelwinkel. Die Öffnungskurve 26 des Einlassventils weist einen variablen Bereich 26a auf, der im Schaubild dunkel markiert ist. Innerhalb dieses dunkel markierten Bereiches kann die Öffnungskurve des Einlassventils variiert werden. Dies bedeutet, dass eine Variation der Öffnungskurve 26 während der Schließbewegung des Einlassventils innerhalb der den dunklen Bereich begrenzenden Linien 26' und 26" möglich ist. Der markierte Bereich fällt in den Bereich des unteren Totpunktes UT im Anschluss an die Verbrennung innerhalb eines Arbeitszyklus. Bei der linken begrenzenden Linie 26' liegt der Schließzeitpunkt des Einlassventils etwa bei 60° vor dem unteren Totpunkt UT, bei der rechten begrenzenden Linie 26" liegt der Schließzeitpunkt des Einlassventils etwa bei 120° nach dem unteren Totpunkt UT.

In den Bereich des vorausgehenden oberen Totpunktes OT fällt ein Überschneidungsbereich 28, in dem sich die Öffnungskurven 26 des Einlassventils und 27 des Auslassventils überschneiden. Im Überschneidungsbereich 28 sind sowohl das Einlassventil als auch das Auslassventil geöffnet. Die Dauer des Überschneidungsbereiches 28 kann eingestellt werden, entweder durch Variation der Öffnungskurve 26 des Einlassventils oder durch Variation der Öffnungskurve 27 des Auslassventils oder durch Variation beider Öffnungskurven.

Der von den Linien 26' und 26" begrenzte dunkle Bereich innerhalb der Öffnungskurve 26 des Einlassventils eröffnet die Möglichkeit, den Druck p_{zyl} und die Temperatur T_{zyl} im Zylinder der Brennkraftmaschine zu beeinflussen. Insbesondere beim Schließen des Einlassventils entlang der äußeren Begrenzungslinie 26" wird dieses Ventil verzögert geschlossen, sodass das Einlassventil noch kurze Zeit geöffnet ist, wenn der Kolben sich bereits wieder in der Kompressionsphase befindet.

Hierdurch wird über das noch geöffnete Einlassventil Verbrennungsluft aus dem Brennraum in den Ansaugtrakt zurückgeführt, was eine Reduzierung des Zylinderinnendrucks p_{Zyl} und der Zylinderinnentemperatur T_{zyl} zur Folge hat.

Die Variation der Öffnungs- bzw. Hubkurve 26 des Einlassventils kann für eine homogene Verbrennung im Teillastbetrieb der Brennkraftmaschine ausgenutzt werden. Durch die Variation der Öffnungskurve innerhalb der Begrenzungslinien 26' und 26" ist es möglich, den Zylinderinnendruck und insbesondere die Zylinderinnentemperatur auf vorgegebene Werte einzustellen. Gemeinsam mit einer entsprechenden Variation des Kraftstoff-Einspritzzeitpunktes werden in den Brennräumen im Teillastbetrieb Bedingungen geschaffen, die eine homogene Verbrennung mit entsprechend reduzierten Schadstoffen, insbesondere mit reduzierten NOₓ-Emissionen begünstigen. Diese Variation der Einlassventil-Öffnungskurve 26 kann bis in den Volllastbetrieb hinein ausgedehnt werden.

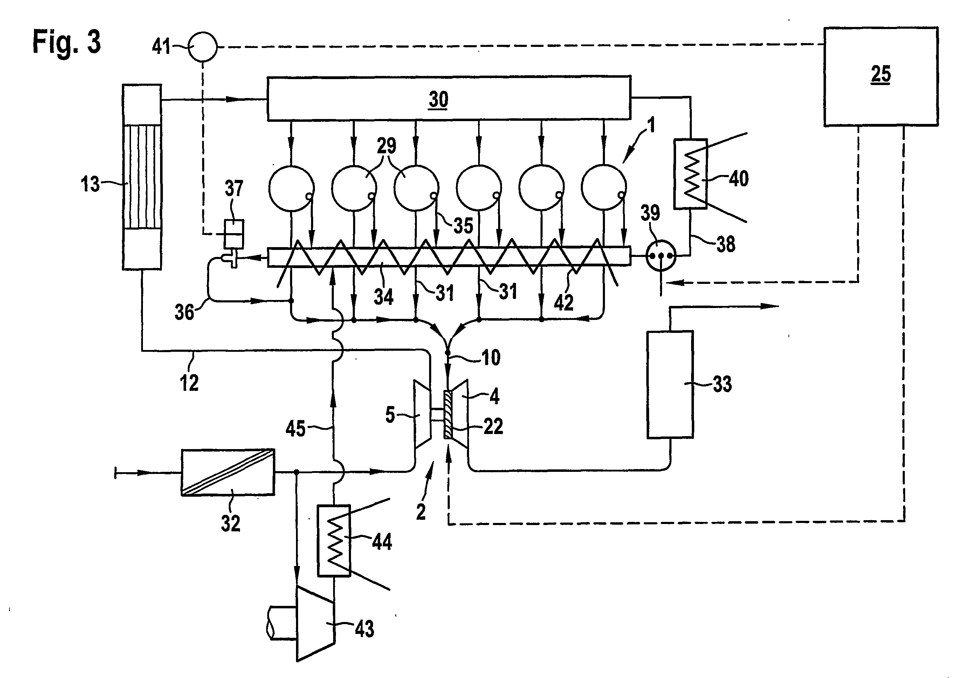

Die in Fig. 3 dargestellte Brennkraftmaschine 1 ist ebenfalls mit einem Abgasturbolader 2 ausgestattet, dessen Abgasturbine 4 mit variabler Turbinengeometrie 22 versehen ist. Luftseitig wird die herangeführte Verbrennungsluft zunächst in einem Luftfilter 32 gereinigt und anschließend im Verdichter 5 des Abgasturboladers 2 verdichtet. Stromab des Verdichters 5 wird die komprimierte Verbrennungsluft in einem Ladeluftkühler 13 gekühlt und anschließend einem gemeinsamen Luftsammler 30 zugeführt, aus dem die Ladeluft in die Brennräume der Zylinder 29 einströmt.

Abgasseitig werden die in der Brennkraftmaschine produzierten Abgase über die Abgasleitung 10 des Abgasstrangs zunächst in die Abgasturbine 4 geleitet, dort entspannt und im weiteren Verlauf stromab der Abgasturbine einer Abgasnachbehandlungseinrichtung 33 zugeführt, in der eine Reinigung der Abgase durchgeführt wird. Die Abgasnachbehandlungseinrichtung 33 umfasst insbesondere einen Katalysator und gegebenenfalls einen Abgasfilter.

Auf der Abgasseite ist außerdem eine Abgassammelschiene 34 (Rail) für sämtliche Zylinder 29 der Brennkraftmaschine vorgesehen. Jeder Zylinder 2 ist über jeweils ein Bremsventil 35 mit der Abgassammelschiene 34 verbunden. In Öffnungsposition der Bremsventile 35 kommuniziert der Zylinderinhalt des jeweiligen zylinders 2 mit der Abgassammelschiene, in Schließposition ist ein Gasaustausch zwischen den Zylindern und der Abgassammelschiene 34 unterbunden. Die Bremsventile 35 an jedem Zylinder 2 sind insbesondere zusätzlich zu Ein- und Auslassventilen am betreffenden Zylinder vorgesehen.

Die Abgassammelschiene 34 ist über eine Abströmleitung 36, in welcher sich ein einstellbares Abströmventil 37 befindet, mit der Abgasleitung 10 des Abgasstrangs der Brennkraftmaschine verbunden. Bei geöffnetem Abströmventil 37 steht der Gasinhalt in der Abgassammelschiene 34 in Strömungsverbindung mit der Abgasleitung 10.

Die Abgassammelschiene 34 ist außerdem über eine äußere Abgasrückführeinrichtung, die eine Rückführleitung 38 umfasst, mit dem Luftsammler 30 verbunden. In der Rückführleitung 38 befindet sich ein einstellbares Sperrventil 39 sowie ein Kühler 40. In geöffneter Position des Sperrventiles 39 steht der Inhalt der Abgassammelschiene 34 in Strömungsverbindung mit dem Luftsammler 30, bei gesperrtem Ventil ist dagegen die Strömungsverbindung unterbrochen.

Das Sperrventil 39 und zweckmäßigerweise auch das Abströmventil 37 sind jeweils druckpulsationsstabil ausgebildet. Dies kann beispielsweise durch eine Realisierung als Drehschieberventil erreicht werden.

Der Brennkraftmaschine 1 ist außerdem eine Regel- und Steuereinheit 25 zugeordnet, welche in Abhängigkeit von Zustands- und Betriebsgrößen der Brennkraftmaschine 1 bzw. der der Brennkraftmaschine zugeordneten Aggregate Stellsignale zur Einstellung und Regelung sämtlicher Stelleinheiten in der Brennkraftmaschine erzeugt, insbesondere der variablen Turbinengeometrie 22, des Abströmventils 37 in der Abströmleitung 36 und des Sperrventils 39 in der Rückführleitung 38.

Die Regel- und Steuereinheit 25 erfasst unter anderem auch den Zustand eines Bremsschalters 41, welcher vom Fahrer zur manuellen Einstellung des Abströmventils 37 und damit zur Einstellung des Drucks im Gasdruckbehälter betätigt werden kann. Über die Regel- und Steuereinheit 25 ist aber insbesondere auch eine selbsttätige Einstellung des Abströmventils 37 ohne Fahrereingriff möglich.

Die mit den Zylindern 2 kommunizierende Abgassammelschiene 34 ermöglicht verschiedene Betriebsweisen der Brennkraftmaschine. Es können insbesondere durch eine Einstellung der der Abgassammelschiene 34 zugeordneten Ventile 35, 37 und 39 die Betriebsweisen Motorbremsbetrieb, Abgasrückführung und Anfettung des Abgases beeinflusst werden.

Zur Wirkungsgradverbesserung ist der Abgasschiene 34 ein Kühler 42 zugeordnet, über den der Gasinhalt in der Abgassammelschiene 34 gekühlt wird. Außerdem kann über einen Kompressor 43 Zusatzluft über eine Leitung 45 in die Abgassammelschiene 34 eingespeist werden. Der Kompressor 43 zweigt vom Ansaugtrakt 12 ab, wobei in der Leitung 45 zwischen Kompressor 43 und Abgassammelschiene 34 ein weiterer Kühler 44 zur Kühlung der komprimierten Luft vorgesehen ist. Mithilfe des Kompressors 43 kann der Druck in der Abgassammelschiene 34 erhöht werden.

Der Druck in der Abgassammelschiene 34 kann aber auch unabhängig vom Kompressor 43 dadurch erhöht werden, dass einzelne Zylinder 29 der Brennkraftmaschine 1 abgeschaltet werden und als Verdichter für die herangeführte Verbrennungsluft dienen, die aus dem Luftsammler 30 in die Brennräume der abgeschalteten Zylinder 29 geführt, dort komprimiert und anschließend über die geöffneten Bremsventile 35 in die Abgassammelschiene 34 abgeleitet wird.

## Patentansprüche

1. Verfahren zum Betrieb einer Brennkraftmaschine, mit an den Zylindern (29) der Brennkraftmaschine (1) angeordneten Einlass- und Auslassventilen (23), wobei die Öffnungskurve (26) der Einlassventile in Abhängigkeit von Zustands- und Betriebsgrößen der Brennkraftmaschine (1) veränderlich einstellbar ist,
**dadurch gekennzeichnet, dass**
im Teillastbetrieb der Brennkraftmaschine (1) der Schließzeitpunkt der Einlassventile und der Kraftstoff-Einspritzzeitpunkt als Funktion der Zylinderinnentemperatur (T_{zyl}) festgelegt werden.

2. Verfahren nach Anspruch 1,
**dadurch gekennzeichnet, dass**
die Einlassventile im Teillastbetrieb der Brennkraftmaschine (1) über den unteren Totpunkt (UT) hinaus offen gehalten werden.

3. Verfahren nach Anspruch 2,
**dadurch gekennzeichnet, dass**
die Einlassventile bis maximal 120° nach unterem Totpunkt (UT) offen gehalten werden.

4. Verfahren nach Anspruch 1,
**dadurch gekennzeichnet, dass**
die Einlassventile im Teillastbetrieb der Brennkraftmaschine (1) bereits vor dem unteren Totpunkt (UT) geschlossen werden.

5. Verfahren nach Anspruch 4,
**dadurch gekennzeichnet, dass**
die Einlassventile nicht früher als 60° vor dem unteren Totpunkt (UT) geschlossen werden.

6. Verfahren nach einem der Ansprüche 1 bis 5,
**dadurch gekennzeichnet, dass**
im Falle von mindestens zwei Einlassventilen pro Zylinder (29) die Einlassventile eines Zylinders (29) synchron betätigt werden.

7. Verfahren nach einem der Ansprüche 1 bis 5,
**dadurch gekennzeichnet, dass**
im Falle von mindestens zwei Einlassventilen pro Zylinder (29) die Einlassventile eines Zylinders (29) asynchron betätigt werden.

8. Verfahren nach Anspruch 7,
**dadurch gekennzeichnet, dass**
alle Einlassventile dieses Zylinders (29) über den unteren Totpunkt (UT) hinausgehend offen gehalten werden, jedoch unterschiedliche Schließzeitpunkte aufweisen.

9. Verfahren nach einem der Ansprüche 1 bis 8,
**dadurch gekennzeichnet, dass**
im Volllastbetrieb die Einlassventile im unteren Totpunkt (UT) geschlossen werden.

10. Verfahren nach einem der Ansprüche 1 bis 9,
**dadurch gekennzeichnet, dass**
im unteren Teillastbetrieb die Einlassventile im unteren Totpunkt (UT) geschlossen werden.

11. Verfahren nach einem der Ansprüche 1 bis 10,
**dadurch gekennzeichnet, dass**
zur Realisierung einer inneren Abgasrückführung durch die Zylinder (29) der Brennkraftmaschine (1) die Einlassventile und die Auslassventile während einer Überschneidungsphase zeitgleich in die Öffnungsposition verstellt werden.

12. Brennkraftmaschine, insbesondere zur Durchführung des Verfahrens nach einem der Ansprüche 1 bis 11, mit an den Zylindern (29) angeordneten Einlass- und Auslassventilen (23), wobei die Öffnungskurve (26) der Einlassventile in Abhängigkeit von Zustands- und Betriebsgrößen der Brennkraftmaschine (1) veränderlich einstellbar ist,
**dadurch gekennzeichnet, dass**
im Teillastbetrieb der Brennkraftmaschine (1) die Einlassventile von Stellsignalen einer Regel- und Steuereinheit (25) variabel zu verstellen sind, wobei der Schließzeitpunkt der Einlassventile und der Kraftstoff-Einspritzzeitpunkt als Funktion der Zylinderinnentemperatur (T_{zyl}) zu bestimmen sind.

13. Brennkraftmaschine nach Anspruch 12,
**dadurch gekennzeichnet, dass**
ein Abgasturbolader (2) mit einer Abgasturbine (4) im Abgasstrang (10) und einem Verdichter (5) im Ansaugtrakt (12) vorgesehen ist.

14. Brennkraftmaschine nach Anspruch 12 oder 13,
**dadurch gekennzeichnet, dass**
zwei in Reihe geschaltete Abgasturbolader (2, 3) vorgesehen sind.

15. Brennkraftmaschine nach einem der Ansprüche 12 bis 14,
**dadurch gekennzeichnet, dass**
eine Abgasrückführeinrichtung mit einer Rückführleitung (38) zwischen dem Abgasstrang und dem Ansaugtrakt (12) und mit einem einstellbaren Sperrventil (39) vorgesehen ist.

16. Brennkraftmaschine nach einem der Ansprüche 12 bis 15,
**dadurch gekennzeichnet, dass**
eine gemeinsame Abgassammelschiene (34) für sämtliche Zylinder (29) vorgesehen ist.

17. Brennkraftmaschine nach Anspruch 16,
**dadurch gekennzeichnet, dass**
der Abgassammelschiene (34) ein Kühler (42) zugeordnet ist.

18. Brennkraftmaschine nach Anspruch 16 oder 17,
**dadurch gekennzeichnet, dass**
in die Abgassammelschiene (34) mittels eines Kompressors (43) Zusatzluft einzuspeisen ist.

## Claims

1. Method for operating an internal combustion engine having inlet and outlet valves (23) positioned on the cylinders (29) of the internal combustion engine (1), it being possible to set the opening curve (26) of the inlet valves variably dependent on status and operating variables for the internal combustion engine (1),
**characterised in that**
when the internal combustion engine (1) is running at part load the closing point of the inlet valves and the fuel injection point are determined as functions of internal cylinder temperature (T_{zyl}).

2. Method in accordance with claim 1,
**characterised in that**
when the internal combustion engine (1) is running at part load the inlet valves are held open past bottom dead centre (UT).

3. Method in accordance with claim 2,
**characterised in that**
the inlet valves are held open until a maximum of 120° after bottom dead centre (UT).

4. Method in accordance with claim 1,
**characterised in that**
when the internal combustion engine (1) is running at part load the inlet valves are closed before bottom dead centre (UT).

5. Method in accordance with claim 4,
**characterised in that**
the inlet valves are closed a maximum of 60° before bottom dead centre (UT).

6. Method in accordance with one of claims 1 to 5,
**characterised in that**
where there are at least two inlet valves per cylinder (29), the inlet valves of one cylinder (29) are actuated synchronously.

7. Method in accordance with one of claims 1 to 5,
**characterised in that**
where there are at least two inlet valves per cylinder (29), the inlet valves of one cylinder (29) are actuated asynchronously.

8. Method in accordance with claim 7,
**characterised in that**
all the inlet valves of this cylinder (29) are held open past bottom dead centre (UT) but have different closing times.

9. Method in accordance with one of claims 1 to 8,
**characterised in that**
when running at full load, the inlet valves are closed at bottom dead centre (UT).

10. Method in accordance with one of claims 1 to 9,
**characterised in that**
when running in the lower range of part load operation, the inlet valves are closed at bottom dead centre (UT).

11. Method in accordance with one of claims 1 to 10,
**characterised in that**
in order to achieve internal exhaust gas recirculation through the cylinders (29) of the internal combustion engine (1), the inlet valves and the outlet valves are set to the open position isochronally during a crossover phase.

12. Internal combustion engine, in particular for performing the method in accordance with one of claims 1 to 11, having inlet and outlet valves (23) positioned on the cylinders (29), it being possible to set the opening curve (26) of the inlet valves variably dependent on status and operating variables for the internal combustion engine (1),
**characterised in that**
when the internal combustion engine (1) is running at part load the inlet valves can be set variably by actuating signals from a control and regulation unit (25), the closing point of the inlet valves and the fuel injection point being determined as functions of internal cylinder temperature (T_{zyl}).

13. Internal combustion engine in accordance with claim 12,
**characterised in that**
a turbocharger (2) is provided with an exhaust gas turbine (4) in the exhaust train (10) and a compressor (5) in the intake train (12).

14. Internal combustion engine in accordance with claim 12 or 13,
**characterised in that**
two series-connected turbochargers (2, 3) are provided.

15. Internal combustion engine in accordance with one of claims 12 to 14,
**characterised in that**
an exhaust gas recirculation device is provided with a recirculation line (38) between the exhaust train and the intake train (12) and with an adjustable shut-off valve (39).

16. Internal combustion engine in accordance with one of claims 12 to 15,
**characterised in that**
a common exhaust gas collector bar (34) is provided for all the cylinders (29).

17. Internal combustion engine in accordance with claim 16,
**characterised in that**
a radiator (42) is associated with the exhaust gas collector bar (34).

18. Internal combustion engine in accordance with claim 16 or 17,
**characterised in that**
additional air can be fed into the exhaust gas collector bar (34) by means of a compressor (43).

## Revendications

1. Procédé pour faire fonctionner un moteur à combustion interne, comprenant des soupapes d'entrée et de sortie (23) disposées sur les cylindres (29) du moteur à combustion interne (1), dans lequel la courbe d'ouverture (26) des soupapes d'entrée est réglable de façon variable en fonction de paramètres d'état et de fonctionnement du moteur à combustion interne (1),
**caractérisé en ce qu'**en cours de fonctionnement à charge partielle du moteur à combustion interne (1), le moment de fermeture des soupapes d'entrée et le moment d'injection de carburant sont déterminés comme une fonction de la température intérieure de cylindre (T_{zyl}).

2. Procédé selon la revendication 1, **caractérisé en ce qu'**en cours de fonctionnement à charge partielle du moteur à combustion interne (1), les soupapes d'entrée sont maintenues ouvertes au-delà du point mort bas (UT).

3. Procédé selon la revendication 2, **caractérisé en ce que** les soupapes d'entrée sont maintenues ouvertes jusqu'à un maximum de 120° après le point mort bas (UT).

4. Procédé selon la revendication 1, **caractérisé en ce qu'**en cours de fonctionnement à charge partielle du moteur à combustion interne (1), les soupapes d'entrée sont fermées même avant le point mort bas (UT).

5. Procédé selon la revendication 4, **caractérisé en ce que** les soupapes d'entrée ne sont pas fermées avant 60° avant le point mort bas (UT).

6. Procédé selon l'une quelconque des revendications 1 à 5, **caractérisé en ce que** dans le cas d'au moins deux soupapes d'entrée par cylindre (29), les soupapes d'entrée d'un cylindre (29) sont actionnées de façon synchrone.

7. Procédé selon l'une quelconque des revendications 1 à 5, **caractérisé en ce que** dans le cas d'au moins deux soupapes d'entrée par cylindre (29), les soupapes d'entrée d'un cylindre (29) sont actionnées de façon synchrone.

8. Procédé selon la revendication 7, **caractérisé en ce que** toutes les soupapes d'entrée de ce cylindre (29) sont maintenues ouvertes au-delà du point mort bas (UT), mais présentent des moments de fermeture différents.

9. Procédé selon l'une quelconque des revendications 1 à 8, **caractérisé en ce qu'**en cours de fonctionnement à pleine charge, les soupapes d'entrée sont fermées au point mort bas (UT).

10. Procédé selon l'une quelconque des revendications 1 à 9, **caractérisé en ce qu'**en cours de fonctionnement à charge partielle, les soupapes d'entrée sont fermées au point mort bas (UT).

11. Procédé selon l'une quelconque des revendications 1 à 10, **caractérisé en ce que** pour la réalisation d'un recyclage de gaz d'échappement intérieur à travers les cylindres (29) du moteur à combustion interne (1), les soupapes d'entrée et les soupapes de sortie sont déplacées pendant une phase de chevauchement en même temps dans la position d'ouverture.

12. Moteur à combustion interne, en particulier pour exécuter le procédé selon l'une quelconque des revendications 1 à 11, comprenant des soupapes d'entrée et de sortie (23) disposées sur les cylindres (29), dans lequel la courbe d'ouverture (26) des soupapes d'entrée est réglable de façon variable en fonction de paramètres d'état et de fonctionnement du moteur à combustion interne (1),
**caractérisé en ce qu'**en cours de fonctionnement à charge partielle du moteur à combustion interne (1), les soupapes d'entrée peuvent être déplacées de variable par des signaux de réglage d'une unité de régulation et de commande (25), dans lequel le moment de fermeture des soupapes d'entrée et le moment d'injection de carburant sont déterminés comme une fonction de la température intérieure de cylindre (T_{zyl}).

13. Moteur à combustion interne selon la revendication 12, **caractérisé en ce qu'**un turbocompresseur à gaz d'échappement (2) avec une turbine à gaz d'échappement (4) dans la branche de gaz d'échappement (10) et un compresseur (5) dans la section d'aspiration (12) est prévu.

14. Moteur à combustion interne selon la revendication 12 ou 13, **caractérisé en ce que** deux turbocompresseurs à gaz d'échappement (2, 3) montés en série sont prévus.

15. Moteur à combustion interne selon l'une quelconque des revendications 12 à 14, **caractérisé en ce qu'**un dispositif de recyclage de gaz d'échappement avec une conduite de recyclage (38) est prévu entre la branche de gaz d'échappement et la section d'aspiration (12) et qu'il est muni d'un clapet antiretour (39) réglable.

16. Moteur à combustion interne selon l'une quelconque des revendications 12 à 15, **caractérisé en ce qu'**un rail collecteur de gaz d'échappement (34) commun est prévu pour tous les cylindres (29).

17. Moteur à combustion interne selon la revendication 16, **caractérisé en ce qu'**un radiateur (42) est attribué au rail collecteur de gaz d'échappement (34).

18. Moteur à combustion interne selon la revendication 16 ou 17, **caractérisé en ce que** de l'air d'appoint peut être alimenté dans le rail collecteur de gaz d'échappement (34) au moyen d'un compresseur (43).
